# EUROPÄISCHE PATENTANMELDUNG

(11) **EP 2 746 232 A1**
(43) Veröffentlichungstag der Anmeldung: **25.06.2014**
(21) Anmeldenummer: 13198593.9
(22) Anmeldetag: 19.12.2013
(51) Int. Cl.: C02F 11/14, C02F 1/66

(54) **Verfahren zum Entwässern von Abfallschlamm**

(30) Priorität: 19.12.2012 DE 102012024888
(71) Anmelder: Messer Austria GmbH, 2352 Gumpoldskirchen (AT); Messer Ibérica S.A., 43080 Tarragona (ES); Institut za Okoljevarstvo in Senzorje, d.o.o., 2000 Maribor (SI)
(72) Erfinder: Gutenberger, Helmut, 4652 Fischlhalm (AT); Thaller, Bernhardt, 3363 Ulmerfeld-Hausmening (AT); Soler, Jordi, 08700 Igualada (ES); Lobnik, Prof. Dr. Aleksandra, 2000 Maribor (SI); Viltuznik, Brank, 3310 Zalec (SI); Bauman, Maja, 2000 Maribor (SI)
(74) Vertreter: Münzel, Joachim R.

(57) **Zusammenfassung**

Nach dem Stande der Technik wird der insbesondere bei der Papierproduktion anfallende Abfallschlamm zur Reduzierung des Abfallvolumens mechanischen Prozessen zur Entwässerung unterzogen, wobei ggf. Flockungshilfsmittel zugegeben werden. Dennoch verbleibt weiterhin ein nicht unerheblicher Teil des Wassers im Abfallschlamm.

Um den Entwässerungsgrad weiter zu erhöhen und die Effizienz der Entwässerung zu verbessern wird erfindungsgemäß vorgeschlagen, den pH-Wert des Abfallschlammes durch Zugabe einer schwachen Säure, insbesondere Kohlendioxid, zu senken. Dadurch wird in erheblichem Maß Wasser freigesetzt und der Trockengehalt im verbleibenden Schlamm erhöht.

## Beschreibung

Die Erfindung betrifft ein Verfahren sowie eine Vorrichtung zum Entwässern von Abfallschlamm, insbesondere zum Entwässern von bei der Papierherstellung anfallendem Abfallschlamm.

Die Entwässerung (oder Eindickung) von Schlämmen dient der Verringerung des Wassergehaltes und somit der Reduktion des Schlammvolumens. Zur Entwässerung werden derzeit üblicherweise Verfahren der maschinellen Klärschlammentwässerung angewendet, wie beispielsweise Entwässerung durch Dekantierzentrifugen, Drehfilter, Siebbandpressen und weiterer Entwässerungsmaschinen. Bei diesen Arten der Entwässerung erreichen die Schlämme einen Trockensubstanz-Gehalt von 20 bis zu 45 Prozent. Ergänzend zu mechanischen Verfahren kommen Chemikalien zum Einsatz, insbesondere Flockungshilfsmittel auf Polymerbasis. Beispiele für derartige Additive zur Unterstützung der Entwässerung werden unter anderem in der WO 2005/108314 A1 oder der US 2008/0135194 A1 beschrieben.

Speziell in der Papierindustrie gibt es fortwährende Bemühungen, das zur Produktion eingesetzte Wasser und die Papierfasern im Produktionsprozess verstärkt zu rezyklieren, um den in diesem Bereich sehr hohen Frischwasserverbrauch zu senken. Derzeit wird das Schlammfiltrat aufgrund der ungenügenden Wasserqualität nur in Ausnahmefällen in den Papermaschinenkreislauf zurückgeführt. Durch eine effiziente Aufkonzentrierung des anfallenden Abfallschlammes kann also der Anteil des in der Papierproduktion wieder verwertbaren Wassers gesteigert werden, gleichzeitig erhöht sich der Feststoffgehalt des verbleibenden Schlammes, wodurch die zu deponierende Menge verringert, beziehungsweise, im Falle einer möglichen thermischen Verwertung, der Brennwert des verbleibenden Trockenschlammes erhöht wird.

Aufgabe der Erfindung ist somit, einen Weg zur effektiveren Entwässerung von Abfallschlamm, insbesondere von bei der Papierherstellung anfallendem Abfallschlamm, zu schaffen.

Gelöst ist diese Aufgabe durch ein Verfahren zum Entwässern von Abfallschlamm mit den Merkmalen des Patentanspruchs 1. Vorteilhafte Ausgestaltungen der Erfindung sind in den Unteransprüchen angegeben.

Der pH-Wert von Abfallschlamm aus der Papierproduktion bewegt sich, in Abhängigkeit von Papiersorte, Rohstoffen, Frischwasserqualität und diversen anderen Parametern typischerweise im Bereich von pH=6,0 bis pH=8,5. Die erfindungsgemäße Zugabe einer Säure führt zu einer Senkung des pH-Werts des als wässerige Suspension vorliegenden Abfallschlammes. Auch wenn die wissenschaftlichen Zusammenhänge noch nicht abschließend geklärt sind, wird vermutet, dass durch die Senkung des pH-Werts Bindungen zwischen im Abfallschlamm enthaltenen Fasern, insbesondere Zellulosefasern, und dem Wasser zumindest teilweise aufgebrochen werden, wodurch die Fasern schrumpfen und Wasser freigesetzt wird.

Die erfindungsgemäße Behandlung des Abfallschlamms mit einer Säure erfolgt dabei vor einem Verfahrensschritt zur mechanischen Entwässerung des Abfallschlamms. Als "mechanische Entwässerung" wird hier ein zur Entwässerung von Abfallschlamm übliches Verfahren wie Zentrifugieren, Filtern oder/oder Siebbandpressen verstanden, mittels dessen das Wasser von festen Bestandteilen des Abfallschlammes getrennt und so für eine nachfolgende Aufarbeitungs- bzw. Klärstufe vorbereitet wird. Weiterhin kann ergänzend ein Verfahrenschritt zur chemischen Entwässerung des Abfallschlamms vor während oder nach der Zugabe der Säure erfolgen. Als "chemische Entwässerung" wird hier die Zugabe von Eindickungs-, Flockungs- oder Fällungshilfsmitteln, wie beispielsweise kationische Polymere oder eine der in der WO 2005/108314 A1 oder der US 2008/0135194 A1 beschriebenen Substanzen verstanden. Die Erfindung führt gegenüber konventionellen Entwässerungsverfahren ohne Säurezugabe bei vorgegebenem Entwässerungsgrad zu einer wesentlichen Einsparung an Fällungshilfsmitteln bzw. an Energie zum Betrieb der Entwässerungsmaschinen und/oder zu einer verkürzten Dauer der Entwässerung bis zum Erreichen eines vorgegebenen Entwässerungsgrads.

Die Zugabe der Säure erfolgt bevorzugt unmittelbar in den Behälter, in dem der Abfallschlamm vorliegt; es ist im Rahmen der Erfindung jedoch auch vorstellbar, dass ein Teilstrom des Abfallschlamms abgezweigt und durch eine mit einer Injektionseinrichtung für die Säure ausgerüstete Bypassleitung geführt wird. Das freigesetzte Wasser wird anschließend von den übrigen Abfallstoffen getrennt, einer Nachklärung unterzogen und steht ggf. für eine erneute Verwertung zur Verfügung. Insbesondere bei der Behandlung von Abfallschlämmen aus der Produktion von Papier oder Pappe ermöglicht die verbesserte Entnahme von Wasser aus dem Abfallschlamm eine vermehrte Verwendung von Kreislaufwasser in der Papierproduktion, wodurch der Frischwasserverbrauch gesenkt werden kann. Zudem beinhaltet die im Anschluss an die Entwässerung verbleibende Trockensubstanz aus der Papier- und Pappeproduktion einen hohen organischen Anteil und weist damit einen gegenüber üblichen Abfallschlämmen aus der Papierindustrie vergleichsweise hohen Heizwert auf.

Grundsätzlich sind für den erfindungsgemäßen Einsatz alle Arten Säuren geeignet, da sich die pH-Wert- Absenkung als der für die Erfindung wesentliche Faktor der Entwässerung darstellt. Besonders bevorzugt ist jedoch Kohlendioxid oder eine organische Säure wie z.B. Ameisen-, Essig-, oder Zitronensäure. Der Vorteil von Kohlendioxid liegt insbesondere darin, dass keine hinsichtlich der Umweltverträglichkeit bedenklichen Anionen anfallen, wie beispielsweise Sulfate, Sulfite, Chloride, Phosphate, etc., sondern lediglich das unbedenkliche Karbonat. Zudem ist gegenüber dem Einsatz von Mineralsäuren wie Schwefelsäure, Salzsäure oder Salpetersäure die Arbeitssicherheit erhöht und es tritt eine verringerte Korrosion an den mit der Säure in Kontakt kommenden Bestandteilen der Apparatur auf. Weiterhin erfolgt die Senkung des pH-Wertes beim Einsatz von Kohlendioxid oder einer vergleichbaren schwachen Säure - im Unterschied zum Einsatz einer starken mineralischen Säure - nur langsam und kann somit gut kontrolliert werden. Es sei darauf hingewiesen, dass im Rahmen der Erfindung auch organische Säuren unter Umweltgesichtspunkten bevorzugte Säuren darstellen; allerdings dürfte ihr Einsatz in der Regel weitaus teuer ist als der Einsatz von Kohlendioxid sein und ist daher weniger bevorzugt.

Das als bevorzugte Säure eingesetzte Kohlendioxid wird in einer vorteilhaften Ausgestaltung der Erfindung unter Druck in flüssiger Form in den als wässerige Suspension vorliegenden Abfallschlamm eingetragen und in der Suspension entspannt. Beim Entspannen entstehen Gasbläschen in der Suspension, deren insgesamt große Oberfläche die Lösung des Kohlendioxids in der Flüssigkeit begünstigt. Alternativ oder ergänzend dazu wird das Kohlendioxid in Gasform oder in fester Form, als Schnee oder Eis, in den Abfallschlamm eingetragen. Als Einrichtungen zum Eintragen des Kohlendioxids eigen sich insbesondere Blaslanzen, mittels denen das Kohlendioxid unter Druck flüssig oder gasförmig in den Abfallschlamm gepresst wird, oder Einperlvorrichtungen, mittels der das Kohlendioxidgas von in Form langsam aufsteigender Gasbläschen in den Abfallschlamm eingebracht wird. Als Beispiele für die letztgenannten Eintragsvorrichtungen seinen hier eine Fritte oder ein mit einer Anzahl von Öffnungen versehenes Eintragrohr genannt. Alternativ oder ergänzend kann das Kohlendioxid auch in wässeriger Lösung dem Abfallschlamm zugeführt werden. Überschüssiges, aus der Suspension entweichendes Kohlendioxid kann im Übrigen aufgefangen und erneut in die Suspension eingetragen werden.

Die Erfindung erweist sich als besonders vorteilhaft bei der Behandlung von Abfallschlämmen, deren pH-Wert im neutralen bzw. schwach alkalischen Bereich bewegt, also beispielsweise in einem Bereich zwischen pH=7 und pH=8,5. Der erfindungsgemäße Effekt tritt grundsätzlich bereits bei einer Absenkung des pH-Wertes um beispielsweise 0,2 bis 0,5 ein; Bevorzugt wird der pH-Wert jedoch auf einen Wert von unter pH=7,0 gesenkt. In der Praxis dürften dabei in der Regel Werte zwischen pH=6,5 und pH=7,0 zu bevorzugen sein, da sich bei einer weiteren Verringerung des pH-Werts zwar die Entwässerung noch geringfügig verbessert, jedoch die entsprechend hohe Menge an zuzuführendem Kohlendioxid in vielen Fällen die Wirtschaftlichkeit des Verfahrens beeinträchtigen dürfte.

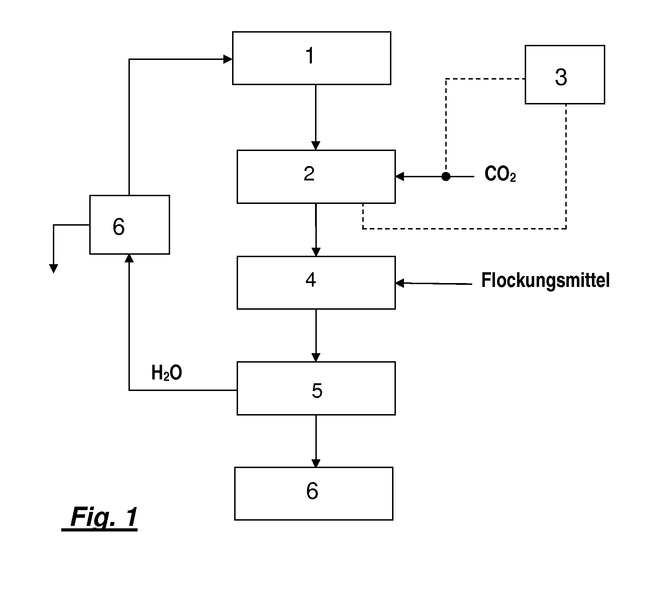

Bevorzugt wird die Erfindung bei der Entwässerung von Abfallschlamm aus der Papier- oder Pappeproduktion eingesetzt. Das infolge der Erfindung verstärkt freigesetzte Wasser wird dabei bevorzugt, ggf. nach einem Verfahrensschritt zur Nachklärung, zumindest teilweise wieder der Papiermaschine zurückgeführt. Anhand der Zeichnung wird das erfindungsgemäße Verfahren erläutert. Die einzige Zeichnung (Fig. 1) zeigt schematisch einen erfindungsgemäßen Verfahrensablauf.

Im Ausführungsbeispiel wird als Ausgangsmaterial Abfallschlamm genommen, der bei der Papierherstellung 1 als Abfallprodukt anfällt. Der als wässerige Suspension vorliegende Abfallschlamm wird einem Schlammbecken zugeführt, in dem ein Verfahrensschritt der Absäuerung 2 vollzogen wird. Dazu wird in das Schlammbecken Kohlendioxid in flüssiger Form oder gasförmig oder zugegeben. Als Eintrageinrichtung dient dabei eine Blaslanze, mittels der das Kohlendioxid unter Druck in die Suspension eingeführt wird, oder ein in die Suspension hineinragendes Eintragsrohr, das mit kleinen Öffnungen versehen ist, durch welche das Kohlendioxid austritt und in Form kleiner Gasperlen in der Suspension aufsteigt. Das Kohlendioxid kann auch zuvor in Wasser gelöst und das auf diese Weise versetzte Wasser dem Schlammbecken zugeführt werden. Durch die Zuführung des Kohlendioxids sinkt der pH-Wert des im Ausführungsbeispiel zunächst schwach alkalischen Abfallschlammes (pH-Wert zwischen pH=7,0 und pH=8,5) auf einen Wert von pH<7,0 ab. Durch die pH-Absenkung schrumpfen die im Abfallschlamm enthaltenen Zellulosefasern und geben das zwischen ihnen gefangene Wasser frei. Die Zuführung des Kohlendioxids wird mittels einer Steuereinheit 3 in Abhängigkeit von gemessenen Parametern, beispielsweise dem pH-Wert im Abfallschlamm oder dem Entwässerungsgrad geregelt.

Dem mit Kohlendioxid behandelten Abfallschlamm wird ein Flockungsmittel, beispielsweise Polyacrylamid, zugegeben und auf diese Weise eine Flockung 4 induziert. Im Ausführungsbeispiel nach Fig. 1 wird die Dosierung des als Flockungsmittel eingesetzten Polymers im Anschluss an Absäuerung 2 durchgeführt, jedoch kann die Polymerdosierung auch vor oder gleichzeitig mit der Säurezugabe erfolgen. Anschließend wird der Abfallschlamm einer mechanischen Entwässerung 5 unterzogen, also insbesondere gefiltert und/oder zentrifugiert und/oder gepresst. Der entwässerte Trockenschlamm wird einer Deponie 6 oder einer Verbrennungseinrichtung zugeführt. Das bei der Entwässerung des Abfallschlammes gewonnene Abwasser wird einer Nachklärung 7 unterzogen und zumindest teilweise wieder in den Prozess der Papierherstellung 1 einbezogen.

### Bezugszeichenliste

- 1.: Papierproduktion
- 2.: Absäuerung
- 3.: Steuereinheit
- 4.: Flockung
- 5.: Mechanische Entwässerungseinheit
- 6.: Deponie
- 7.: Nachklärung

## Patentansprüche

1. Verfahren zum Entwässern von Abfallschlamm, bei dem der Abfallschlamm in einer wässrigen Suspension gesammelt einem Verfahrensschritt zur mechanischen und/oder chemischen Entwässerung unterzogen wird,
**dadurch gekennzeichnet,**
**dass** vor dem Verfahrensschritt zur mechanischen und/oder chemischen Entwässerung der pH-Wert der Suspension durch sukzessive Zugabe einer Säure gesenkt wird.

2. Verfahren nach Anspruch 1, **dadurch gekennzeichnet, dass** als Säure Kohlendioxid und/oder eine organische Säure zum Einsatz kommt.

3. Verfahren nach Anspruch 2, **dadurch gekennzeichnet, dass** das Kohlendioxid unter Druck in flüssiger Form oder gasförmig in den Abfallschlamm eingetragen wird.

4. Verfahren nach einem der vorhergehenden Ansprüche, **dadurch gekennzeichnet, dass** die Säure in gelöster Form dem Abfallschlamm zugeführt wird.

5. Verfahren nach einem der vorhergehenden Ansprüche, **dadurch gekennzeichnet, dass** der pH-Wert auf einen Wert von pH < 7,0, vorzugsweise auf einen Wert von zwischen pH < 7 und pH > 6,5 gesenkt wird.

6. Verfahren nach einem der vorhergehenden Ansprüche, **gekennzeichnet durch** den Einsatz zum Entwässern von bei der Produktion von Papier oder Pappe anfallendem Abfallschlamm.
